(19) Europäisches Patentamt

European Patent Office

Office européen des brevets

(11) Veröffentlichungsnummer: **0 219 004 B1**

(12) **EUROPÄISCHE PATENTSCHRIFT**

(45) Veröffentlichungstag der Patentschrift: **19.06.91**

(51) Int. Cl.⁵: **C02F 1/14**, C02F 9/00, C02F 1/00

(21) Anmeldenummer: **86113597.8**

(22) Anmeldetag: **02.10.86**

Die Akte enthält technische Angaben, die nach dem Eingang der Anmeldung eingereicht wurden und die nicht in dieser Patentschrift enthalten sind.

(54) Patrone für ein drucklos arbeitendes Gerät zur Verbesserung der Qualität von Trinkwasser.

(30) Priorität: **05.10.85 DE 3535677**

(43) Veröffentlichungstag der Anmeldung:
**22.04.87 Patentblatt 87/17**

(45) Bekanntmachung des Hinweises auf die Patenterteilung:
**19.06.91 Patentblatt 91/25**

(84) Benannte Vertragsstaaten:
**AT BE CH DE FR GB IT LI LU NL SE**

(56) Entgegenhaltungen:
**DE-A- 2 917 134       DE-A- 2 919 901
DE-A- 3 207 511       DE-A- 3 430 070
FR-A- 2 145 887       US-A- 4 378 293**

(73) Patentinhaber: **Alhäuser, Erich
Am Hölzeberg 2
W-5412 Ransbach-Baumbach(DE)**

(72) Erfinder: **Alhäuser, Erich
Am Hölzeberg 2
W-5412 Ransbach-Baumbach(DE)**

(74) Vertreter: **Jochem, Bernd, Dipl.-Wirtsch.-Ing.
Patentanwälte Beyer & Jochem Postfach 17
01 45 Staufenstrasse 36
W-6000 Frankfurt/Main 1(DE)**

**Beschreibung**

Die Erfindung betrifft eine Patrone für ein drucklos arbeitendes Gerät zur Verbesserung der Qualität von Trinkwasser, bestehend aus einem in das Gerät zur Durchströmung unter Schwerkraft einsetzbaren zylindrischen oder kegelstumpfförmigen Gehäuse mit einer Füllung aus einem Behandlungsmaterial wie Ionenaustauschharz und/oder Aktivkohle und gegebenenfalls einem bakteriostatisch wirkenden Stoff, dessen obere und untere Endwand Ein- und Auslaßöffnungen enthalten, die aus jeweils einer Vielzahl enger Schlitze in den Endwänden bestehen.

Eine solche Patrone ist aus der DE-A-29 19 901 bekannt. Das dortige Gerät zur Verbesserung der Qualität von Trinkwasser weist einen auf den Rand eines topfförmigen Gefäßes aufsetzbaren flachen Trichter mit einer zentralen Öffnung an der tiefsten Stelle seines Bodens auf, in welche die Patrone bis zur Deckung ihrer horizontalen Oberseite mit dem Trichterboden eingesetzt wird. Die Patrone ragt dadurch in das Innere des Gefäßes und taucht beim Ansteigen des Wasserspiegels mit ihrem horizontal abgeschlossenen unteren Ende in das sich im Gerät ansammelnde Wasser mehr oder weniger tief ein. Im Gebrauch staut sich das in den Trichter eingegossene Wasser, wenn das Eingießen nicht sehr langsam vorgenommen wird, so daß auch das obere Ende der Patrone während des Gebrauchs zeitweilig unter Wasser steht. Um dennoch hierbei die Luft aus der Patrone ungehindert entweichen lassen zu können, trägt die Patrone in der Mitte der oberen Endwand ein nach oben ragendes, oben mit Öffnungen versehenes Entlüftungsrohr, das nicht nur störend ist, sondern auch den Herstellungsaufwand beträchtlich vergrößert.

Wäre dieses Rohr nicht vorhanden, würde die beim Aufgießen des Wassers aus der Patrone in Gestalt von Blasen verdrängte Luft an den schmalen Schlitzen der Einlaßöffnung hängenbleiben und diese verschließen.

In der Erkenntnis dieses Problems ist deshalb bei einer weiteren bekannten Patrone DE-A-(34 09 828) zur Vermeidung des Entlüftungsrohres ein besonders ausgestalteter Siebdeckel am oberen Ende der Patrone vorgesehen, der eine im Gebrauchszustand in der horizontalen Ebene liegende Stirnwand und eine am Rand derselben sich nach unten anschließende zylinderförmige Wandung aufweist. Für den Einlauf des Wassers in die Patrone befinden sich in dieser zylinderförmigen Wandung senkrechte Siebschlitze, und es können auch teilweise in der Stirnwand Siebschlitze vorgesehen sein. Hierdurch läßt sich zwar erreichen, daß z. : Vermeidung des Vernetzens der Siebschlitze die Flüssigkeit nur zum geringen Teil oder nicht in den Raum des Siebdeckels bei der Benutzung vordringt, so daß der Raum im Siebdeckel unterhalb der Stirnwand mit Luft gefüllt bleibt, die im oberen Bereich der Schlitze austreten kann.

Gleichzeitig vermögen sich jedoch Bakterien in diesem somit ständig mit Luft gefülltem Raum auszubreiten, weil darin der bakteriostatisch wirkende Stoff mangels Feuchtigkeit nicht zu wirken vermag. Außerdem besteht bei einer solchen Zuleitung des Wassers im wesentlichen nur am Umfang der Patrone die Neigung, daß das Wasser hauptsächlich nur die Füllung der Patrone im äußeren Umfangsbereich durchströmt und dadurch zum einen die Patronenfüllung schlecht ausgenutzt wird und zum anderen der zentrale Teil der Patronenfüllung, zumindest bis zu einer gewissen Tiefe, trocken mit den oben geschilderten Nachteilen bleibt.

Die Anordnung geneigter Schlitze auf dem geneigten Abschnitt eines Patronengehäuses ist zwar bereits aus der DE-A-32 48 126 bekannt, diese dort den Auslaß einer Zwei-Kammer-Patrone bildenden Schlitze stehen jedoch ständig unter Wasser, während die Entlüftung über besondere Entlüftungsöffnungen am oberen Ende eines an die geneigte Gehäusewandung anschließenden Patronenhalses erfolgt.

Der Erfindung liegt deshalb die Aufgabe zugrunde, eine Patrone der eingangs genannten Art dahingehend weiterzubilden, daß ohne die Gefahr der Verkeimung im oberen Patronenbereich dennoch ein gesondertes Entlüftungsrohr vermieden wird.

Erfindungsgemäß wird diese Aufgabe dadurch gelöst, daß die oberen und unteren Endwände des Gehäuses zumindest im Bereich der Schlitze gegenüber der Horzontalen geneigt sind und die Schlitze gleichfalls gegenüber der Horizontalen geneigt verlaufen, wobei vorzugsweise die untere Gehäuseendwand zum Rand hin ansteigt.

Durch die Erfindung wird eine Neigung aller Schlitze sichergestellt mit der Folge, daß daran zurückgehaltene Luftblasen längs der Schlitze zu deren höheren Enden perlen, während der Hauptteil der Schlitze für den Durchtritt des Wassers frei bleibt. Gleichzeitig wird gewährleistet, daß sich das in die Patrone gelangende Wasser über deren gesamten Querschnitt verteilt und diesen nahezu gleichförmig durchströmt, ohne daß unter der oberen Endwand trockene Bereiche verbleiben, in denen sich Bakterien ausbreiten können.

Nach einem weiteren Merkmal zur vorteilhaften Ausgestaltung der Erfindung sind die Gehäuseendwände als Kegelflächen ausgebildet, so daß alle Schlitze der unteren Gehäuseendwand radial nach auswärts ansteigen.

Demgegenüber ist der Verlauf der Neigung der oberen Gehäuseendwand grundsätzlich gleichgültig. Es ist jedoch vorzuziehen, den Verlauf spiegelbildlich zu dem der unteren Stirnfläche zu gestalten, so daß die Luftblasen an den einzelnen Schlitzen in der Mitte der oberen Stirnwand zusammentreffen und sich zur Begünstigungder Ablösung vereinigen.

Der Kegelwinkel beträgt zweckmäßig zwischen 140° und 160°, vorzugsweise 150°, was eine günstige Neigung der Schlitze für das erwünschte Entlanglaufen der Luftblasen bei nicht zu weit vorspringenden Stirnenden der Patrone ergibt.

Schließlich sieht ein besonderes Ausgestaltungsmerkmal der Erfindung vor, daß das Gehäuse der Patrone am unteren Ende mit am Umfang verteilten Vorsprüngen zur senkrechten Aufstellung außerhalb des Geräts versehen ist. Dadurch wird die Handhabung beim Wechsel der Patrone erleichtert, da die Patrone nicht wegrollen kann.

Die Erfindung wird nachstehend in Verbindung mit einigen in der Zeichnung dargestellten Ausführungsbeispielen näher erläutert. Es zeigen:

Fig. 1     einen Vertikalschnitt durch ein drucklos arbeitendes Gerät zur Verbesserung der Qualität von Trinkwasser mit einer darin eingesetzten Patrone gemäß der Erfindung,

Fig. 2 bis 4     andere Ausführungsformen der erfindungsgemäßen Patrone im Axialschnitt ohne Füllung

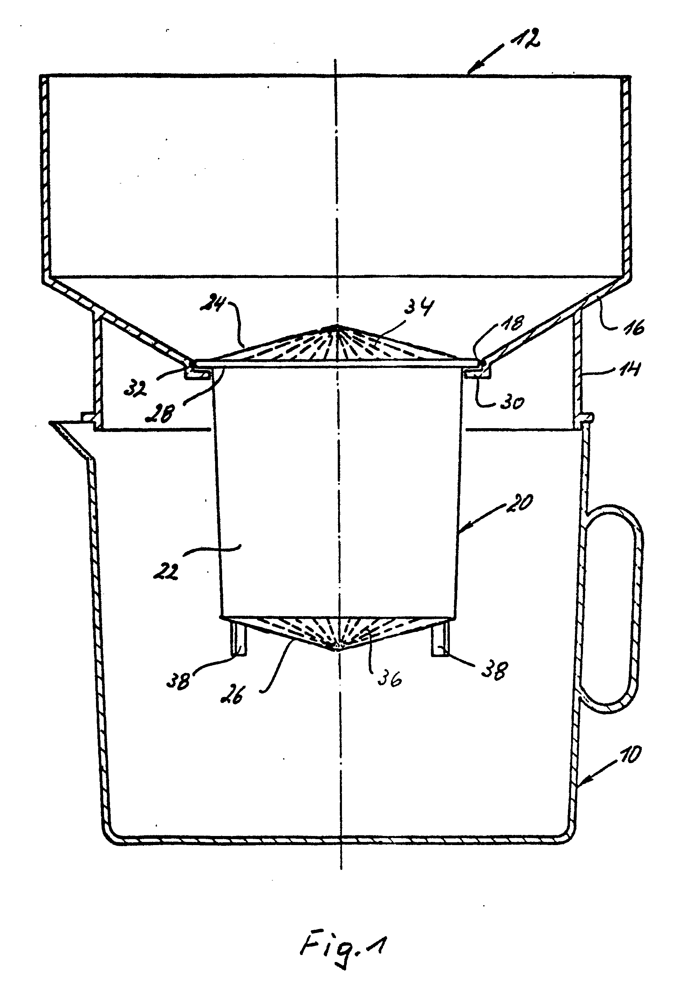

In Fig. 1 sind mit 10 ein topfartiges Gefäß und mit 12 ein Trichter bezeichnet, der mit einem kragenförmigen Ansatz 14 seines Bodens 16 auf den Öffnungsrand des Gefäßes 10 aufgesetzt ist.

Der konisch gestaltete Boden 16 des Trichters 12 enthält eine zentrale Öffnung 18, in welche eine in ihrer Gesamtheit mit 20 bezeichnete Patrone 20 eingesetzt ist, die mit einem Material zur Verbesserung der Qualität von Trinkwasser wie einem Ionenaustauschharz und/oder Aktivkohle sowie gegebenenfalls einem bakteriostatisch wirkenden Stoff, wie insbesondere Silber, in dissoziierbarer Form gefüllt ist.

Die Patrone 20 hat ein nahezu zylindrisches Gehäuse mit einer sich geringfügig nach unten im Durchmesser verjüngenden Mantelwand 22, einer stumpfkegeligen oberen Endwand 24, einer unteren stumpfkegeligen Endwand 26 sowie einem zwischen der Mantelwand 22 und der oberen Endwand 24 angeordneten Bund 28, der sich auf einer Schulter 30 in der zentralen Öffnung der Bodenfläche 16 des Trichters 12 unter Verwendung eines Dichtungsrings 32 dichtend abstützt. Die Kegelflächen der Endwände 24, 26 sind symmetrisch zueinander nach auswärts gerichtet und enthalten eine Vielzahl radial verlaufender Schlitze 34 bzw. 36, die sich vom Außenumfang bis in unmittelbare Nähe der Kegelspitze erstrecken.

Bei der ersten Inbetriebnahme des Geräts füllt sich die zunächst trockene Patrone 20 mit dem in den Trichter 12 eingegossenen Wasser auf, das wegen des Strömungswiderstandes in der Patrone im Trichter angestaut wird und dadurch die obere Endwand 24 mit den dortigen Schlitzen 34 mehr oder weniger hoch überdeckt. Ein Teil der in der Patrone enthaltenen Luft wird dabei versuchen, durch die Schlitze 34 in Gestalt von Luftblasen zu entweichen. Diese Luftblasen werden aufgrund von Adhäsionskräften versuchen, an den Schlitzen 34 zu verbleiben, wo sie jedoch aufgrund der Neigung der Schlitze zum Zentrum der Endwand 24 wandern und sich dort mit den Luftblasen anderer Schlitze vereinigen. Dadurch gewinnen die Luftblasen eine solche Größe, daß ihr Auftrieb die Adhäsionskraft überwindet und sich die Blasen von der oberen Endwand 24 des Patronengehäuses lösen.

Die übrige Luft wird nach unten aus der Patrone durch die Schlitze 36 in der unteren Gehäuseendwand herausgedrückt und vermag von dort ohne jeden weiteren Widerstand in die Atmosphäre zu entweichen, solange der Wasserspiegel im Gefäß 10 noch nicht die Höhe der unteren Gehäuseendwand 26 erreicht hat. Wie die Praxis gezeigt hat, geht das Füllen des Gefäßes 10 bis zu dieser Höhe schneller vor sich als die vollständige Verdrängung der Luft aus der Patrone. Folglich wird auch dann noch Luft aus der Patrone nach unten herausgedrückt, wenn der Wasserspiegel das untere Ende der Patrone bereits erreicht hat und über dieses hinaus weiter ansteigt. Die durch die Schlitze 36 hindurchtretende Luft bildet innerhalb des im Gefäß 10 enthaltenen Wassers dann gleichfalls Luftblasen, die dank der Neigung der Schlitze 36 an diesen radial nach auswärts entlangwandern und sich schließlich am äußeren Ende der Schlitze von der unteren Gehäusewand 26 lösen und seitlich der Patrone 20 zur Wasseroberfläche innerhalb des Gefäßes 10 aufsteigen. Durch die kegelige Ausbildung der unteren Gehäuseendwand 26 wird vermieden, daß sich solche Luftblasen unter der Patrone fangen und den Austritt des Wassers durch die Schlitze 36 behindern.

Die Patrone 20 ist am unteren Ende mit drei oder mehr am Umfang verteilten Füßchen 38 versehen, mit denen die Patrone vor bzw. nach der Herausnahme aus dem Gerät abgesetzt werden kann, ohne daß die Gefahr besteht, daß die Patrone davonrollt. Gleichzeitig wird die Patrone hierbei in erwünschter Weise in aufrecht stehender Lage gehalten.

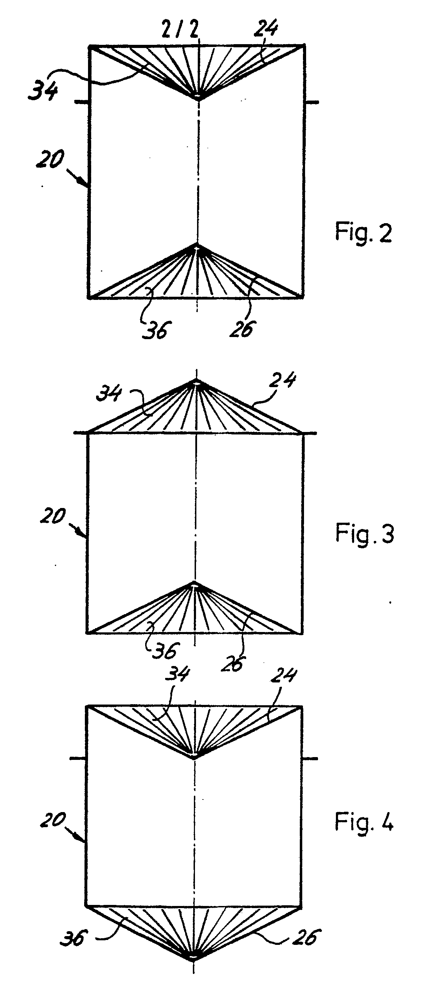

Die Fig. 2 bis 4 zeigen in schematischer Darstellung abgewandelte Ausführungsformen der in Fig. 1 gezeigten Patrone, die in allen Fällen als Rotationskörper zu einer vertikalen Achse ausgebildet sind.

In Fig. 2 sind die Endwände 24, 26 hohlkegelig ausgebildet, so daß die obere Gehäuseendwand 24 zum Rand hin ansteigt, während die unteren Gehäuseendwand 26 zum Rand hin abfällt. Dadurch erübrigt sich die Anbringung von Vorsprüngen oder Füßchen 38 zur Aufstellung der Patrone 20 außerhalb des Geräts. Durch die hohlkegelige Ausbildung der unteren Endwand 26 wird sich zwar beim Ansteigen des Wassers im Gefäß 10 Luft unter der Patrone 20 verfangen. Diese Luft wird jedoch ebenso wie bei der Ausführungsform nach Fig. 1 entlang der Schlitze 36, nur in diesem Fall zur Patronenmitte hin wandern, wo sie ein Luftpolster bildet, während der Hauptteil der Schlitze 36 frei von Luft zur ungehinderten Hindurchströmung von Wasser bleibt.

Bei der Ausführungsform nach Fig. 3 ist die obere Endwand 24 als vorspringender Kegel wie in Fig. 1 ausgebildet, während die untere Endwand 26 die Hohlkegelform der Fig. 2 aufweist. Das für Fig. 2 Gesagte gilt demgemäß auch für diese Ausführungsform.

Schließlich zeigt Fig. 4 das Gegenstück zu Fig. 3 mit hohlkegeliger oberer Endwand gemäß Fig. 2 und kegeliger Ausbildung der unteren Endwand 36 gemäß Fig. 1, so daß auch hier wie bei Fig. 1 jegliches Verfangen von Luft unter der Patrone 20 vermieden wird.

Bei den vorstehend beschriebenen Ausführungsbeispielen ist die Patrone in allen Fällen als Rotationskörper ausgebildet und hat somit runden Querschnitt. Die Erfindung ist jedoch hierauf nicht beschränkt. Vielmehr kann die Patrone auch ovalen oder eckigen Querschnitt aufweisen, und die Endwände 24, 26

EP 0 219 004 B1

können durchgehend von einem zum andere Ende in einer Ebene schräg verlaufen oder beispielsweise dachförmig um eine Querachse abgeknickt sein. Wesentlich für die Erfindung ist allein, daß die Endwände 24, 26 überhaupt geneigt sind und die Schlitze ihrerseits gleichfalls gegenüber der Horizontalen geneigt verlaufen, so daß die Luft gezwungen wird, längs der Schlitze zu wandern und diese zum ungehinderten Durchtritt des Wassers freizugeben.

**Ansprüche**

1. Patrone für ein drucklos arbeitendes Gerät zur Verbesserung der Qualität von Trinkwasser, bestehend aus einem in das Gerät zur Durchströmung unter Schwerkraft einsetzbaren Gehäuse mit einer Füllung aus einem Behandlungsmaterial wie Ionenaustauschharz und/oder Aktivkohle und gegebenenfalls einem bakteriostatisch wirkenden Stoff, dessen obere und untere Endwände Ein- und Auslaßöffnungen enthalten, die aus jeweils einer Vielzahl enger Schlitze in den Endwänden bestehen, **dadurch gekennzeichnet,** daß die oberen und unteren Endwände (24, 26) des Gehäuses zumindest im Bereich der Schlitze (34, 36) gegenüber der Horizontalen geneigt sind und die Schlitze (34, 36) gleichfalls gegenüber der Horizontalen geneigt verlaufen.

2. Patrone nach Anspruch 1 , **dadurch gekennzeichnet,** daß die untere Gehäuseendwand (26) zum Rand hin ansteigt.

3. Patrone nach Anspruch 1 oder 2 , **dadurch gekennzeichnet,** daß die Gehäuseendwände (24, 26) als Kegelflächen ausgebildet sind.

4. Patrone nach einem der Ansprüche 1 bis 3 , **dadurch gekennzeichnet,** daß die obere Gehäuseendwand (24) spiegelbildlich zur unteren Gehäusestirnfläche (26) gestaltet ist.

5. Patrone nach Anspruch 4 , **dadurch gekennzeichnet,** daß der Kegelwinkel zwischen 140° und 160°, vorzugsweise 150° beträgt.

6. Patrone nach einem der vorhergehenden Ansprüche, **dadurch gekennzeichnet,** daß das Gehäuse der Patrone (20) am unteren Ende mit am Umfang angeordneten Vorsprüngen (38) zur senkrechten Aufstellung außerhalb des Geräts versehen ist.

**Claims**

1. A cartridge for a pressurelessly operating apparatus for improving the quality of drinking water, comprising a housing which can be inserted in the apparatus for gravity flow and which has a filling of a treatment material, such as ion-exchange resin and/or activated carbon and, optionally, a bacteriostatically acting material, the top and bottom end walls of which include inlet and outlet openings each comprising a plurality of narrow slots in the end walls, characterised in that the top and bottom end walls (24, 26) of the housing are inclined relative to the horizontal at least in the vicinity of the slots (34, 36) and the slots (34, 36) also extend inclined relative to the horizontal.

2. A cartridge according to Claim 1, characterised in that the bottom housing end wall (26) rises towards the rim.

3. A cartridge according to Claim 1 or 2, characterised in that the housing end walls (24, 26) are formed as conical surfaces.

4. A cartridge according to any one of Claims 1 to 3, characterised in that the top housing end wall (24) is in the form of a mirror-image with respect to the housing end surface (26).

5. A cartridge according to Claim 4, characterised in that the cone angle is between 140° and 160°, preferably 150°.

6. A cartridge according to any one of the preceding Claims, characterised in that at its bottom end the housing of the cartridge (20) is provided with peripherally arranged projections (38) for vertical mounting outside the apparatus.

5

**Revendications**

1. Cartouche pour un dispositif fonctionnant sans pression pour améliorer la qualité de l'eau potable, comprenant un boîtier qui peut être placé dans le dispositif pour le passage de l'eau par gravité, ce boîtier étant rempli d'un produit de traitement tel qu'une résine échangeuse d'ions et/ou du charbon actif et éventuellement d'une substance à action bactériostatique, les parois supérieure et inférieure dudit boîtier comportant des ouvertures d'entrée et de sortie constituées chacune d'une pluralité de fentes étroites pratiquées dans lesdites parois, caractérisée en ce qu'au moins dans la zone des fentes (34, 36) les parois supérieure et inférieure (24, 26) du boîtier sont inclinées par rapport à l'horizontale et les fentes (34, 36) sont également inclinées par rapport à l'horizontale.

2. Cartouche selon la revendication 1, caractérisée en ce que la paroi inférieure (26) du boîtier s'élève jusqu'à sa bordure.

3. Cartouche selon la revendication 1 ou 2, caractérisée en ce que les parois (24, 26) du boîtier présentent la forme de surfaces coniques.

4. Cartouche selon les revendications 1 à 3, caractérisée en ce que la paroi supérieure (24) du boîtier présente une forme symétrique de la paroi inférieure (26) du boîtier.

5. Cartouche selon la revendication 4, caractérisée en ce que l'angle de conicité est compris entre $140°$ et $160°$, et est de préférence de $150°$.

6. Cartouche selon l'une des revendications précédentes, caractérisée en ce que le boîtier de la cartouche (20) est muni, à son extrémité inférieure, de saillies (38) disposées sur sa périphérie pour le positionner verticalement en dehors du dispositif.

Fig.1

Fig. 2

Fig. 3

Fig. 4